(19) Europäisches Patentamt / European Patent Office / Office européen des brevets

(11) **EP 4 457 178 B1**

(12) **FASCICULE DE BREVET EUROPEEN**

(45) Date de publication et mention
de la délivrance du brevet:
**11.02.2026 Bulletin 2026/07**

(21) Numéro de dépôt: **22844135.8**

(22) Date de dépôt: **23.12.2022**

(51) Classification Internationale des Brevets (IPC):
**C01B 25/234** (2006.01)     **C01B 25/237** (2006.01)
**C01B 25/46** (2006.01)

(52) Classification Coopérative des Brevets (CPC):
**C01B 25/234; C01B 25/237; C01B 25/2377**

(86) Numéro de dépôt international:
**PCT/EP2022/087733**

(87) Numéro de publication internationale:
**WO 2023/126349 (06.07.2023 Gazette 2023/27)**

(54) **MÉTHODE DE PURIFICATION D'AU MOINS UNE SOLUTION AQUEUSE D'ACIDE PHOSPHORIQUE**

VERFAHREN ZUR REINIGUNG MINDESTENS EINER WÄSSRIGEN PHOSPHORSÄURELÖSUNG

METHOD FOR PURIFICATION OF AT LEAST ONE AQUEOUS SOLUTION OF PHOSPHORIC ACID

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **27.12.2021 BE 202106073**

(43) Date de publication de la demande:
**06.11.2024 Bulletin 2024/45**

(73) Titulaire: **Prayon**
**4480 Engis (BE)**

(72) Inventeurs:
• **HEPTIA, Bernard**
**4480 Engis (BE)**
• **HALLEUX, Hubert**
**4480 Engis (BE)**
• **GABRIEL, Damien**
**4480 Engis (BE)**

(74) Mandataire: **Gevers Patents**
**De Kleetlaan 7A**
**1831 Diegem (BE)**

(56) Documents cités:
US-A- 4 041 134     US-A- 4 321 245
US-A1- 2016 332 879

**Description**

**DOMAINE DE L'INVENTION**

La présente invention se situe dans le domaine de la production d'acide phosphorique, plus particulièrement dans le domaine de la purification de l'acide phosphorique.

**ETAT DE L'ART**

L'acide phosphorique est un acide faible pouvant être utilisé dans de nombreuses applications. Il peut par exemple être utilisé dans le domaine alimentaire ou dans des applications industrielles et pharmaceutiques, par exemple comme régulateur de pH. Il peut également être utilisé comme matière première dans la fabrication de nombreux sels phosphatés.

L'acide phosphorique est produit au départ de roches phosphatées et/ou de sources secondaires de phosphore telles que cendres de boues de station d'épuration, cendres de farines animales. Malheureusement, ces sources de phosphate contiennent souvent de nombreuses impuretés qui se retrouvent potentiellement dans l'acide phosphorique. La quantité des impuretés et la nature de celles-ci varient notamment en fonction du type de procédé utilisé pour produire l'acide phosphorique et des matières premières utilisées durant ladite méthode. Par exemple, dans le cas d'un procédé de production d'acide phosphorique par voie humide dans lequel une source de phosphate est attaquée à l'acide sulfurique, l'acide phosphorique produit comprend un taux relativement élevé de sulfate.

En fonction des applications visées, le niveau de pureté de l'acide phosphorique varie fortement. Par exemple, pour les applications à haute valeur ajoutée, notamment dans le domaine alimentaire et en haute-technologie, les concentrations en impuretés doivent être faibles. Par exemple, dans le cas des applications alimentaires, la concentration en sulfates (exprimée en équivalent $SO_4$) est en général inférieure à 100 ppm tandis que la teneur en phosphore, exprimée en équivalent $P_2O_5$ est en général d'au moins 60% en poids (Phosphoric Acid, Purification, Uses, Technology and Economics, R. Gilmour, CRC Press, 2014, chap 2 Purification of phosphoric Acid, page 77).

Il existe des méthodes connues dans l'état de l'art pour purifier l'acide phosphorique. Le document US4321245A divulgue un procédé de purification de l'acide phosphorique par voie humide. Dans ce procédé du carbonate de baryum est ajouté directement à de l'acide phosphorique brut, ayant 40-55 % en poids de $P_2O_5$. Le mélange obtenu est directement injecté au niveau de la tête de l'installation d'extraction.

Cependant, certains problèmes ont été identifiés dans les méthodes de l'état de l'art. Tout d'abord, la coulabilité du carbonate de baryum n'est pas toujours optimale. En effet, lorsque des poudres de carbonate de baryum sont ajoutées à partir d'un silo, des agglomérats peuvent se former, ce qui nuit à la coulabilité du carbonate de baryum. De plus, la réactivité du carbonate de baryum n'est pas toujours optimale lorsque des granulés de carbonate de baryum sont utilisés, ce qui peut entrainer des temps de réaction trop longs et/ou une surconsommation de carbonate de baryum. La combinaison de ces problèmes conduit à réduire la rentabilité des procédés de purification de l'acide phosphorique. De plus, chez certains producteurs, les installations existantes ne permettent pas toujours la mise en œuvre directe des procédés de l'état de l'art.

Il existe donc un besoin continu d'améliorer les méthodes de purification d'acide phosphorique, en particulier pour les applications à haute valeur ajoutée pour lesquelles, la teneur en sulfates doit être faible et la teneur en $P_2O_5$ doit être élevée, telles que la production de sels d'acides phosphoriques et les applications dans le domaine alimentaire. De manière plus particulière, il existe un besoin pour une méthode de purification de l'acide phosphorique versatile permettant d'éviter les problèmes liés à la coulabilité du carbonate de baryum tout en permettant une rentabilité optimale.

**RÉSUMÉ DE L'INVENTION**

Les inventeurs ont trouvé de manière surprenante que la méthode suivant la présente invention permet de solutionner les problèmes identifiés ci-avant. La présente invention concerne une méthode de purification d'au moins une solution aqueuse d'acide phosphorique [ci-après, solution AP] en continu comprenant au moins les étapes suivantes :

étape 1 : fourniture dans au moins une cuve d'au moins une solution AP dérivée d'au moins un acide phosphorique obtenu par un procédé de production d'acide phosphorique par voie humide, ladite solution AP dans ladite cuve ayant une température comprise entre 65 °C et 98 °C ; ladite solution AP comprenant avant ladite étape 1 :

- entre 50% et 63 % en poids de $P_2O_5$ et
- entre 0,15 % et 0,6% en poids de $SO_3$ par rapport au poids total de ladite solution AP ;

étape 2 : ajout de carbonate de baryum dans ladite cuve ; ledit carbonate de baryum présentant une distribution granulométrique telle que :

- moins de 1% en poids dudit carbonate de baryum passe à travers un tamis de maille de 45 $\mu$m ;
- entre 0 % et 2 % en poids, dudit carbonate de baryum passe à travers un tamis de maille de 63 $\mu$m ; préférentiellement entre 1 % et 2 % en poids, dudit carbonate de baryum passe à travers un tamis de maille de 63 $\mu$m ;
- entre 2 et 11% en poids dudit carbonate de baryum passe à travers un tamis de maille de 250 $\mu$m ;
- entre 25 et 60 %en poids, de préférence entre 30 et 55 % en poids dudit carbonate de baryum passe à travers un tamis de maille de 500 $\mu$m, plus préférentiellement entre 30 et 50 % en poids dudit carbonate de baryum passe à travers un tamis de maille de 500 $\mu$m, encore plus préférentiellement, entre 30 et 45% en poids dudit carbonate de baryum passe à travers un tamis de maille de 500 $\mu$m ;
- au moins 85% en poids dudit carbonate de baryum passe à travers un tamis de maille de 1000 $\mu$m ;

étape 3 : mélange dudit carbonate de baryum et de ladite solution AP dans ladite cuve ;

étape 4 : sortie hors de ladite cuve de ladite solution AP formée pendant l'étape 3 après un temps de séjour de ladite solution AP dans ladite au moins une cuve, compris entre 15 et 240 minutes ;

étape 5 : purification de ladite solution AP sortie de ladite au moins une cuve à l'étape 4, par extraction par solvant pour obtenir une solution AP purifiée.

Dans un mode de réalisation préféré, ladite méthode comprend au moins les étapes suivantes:

étape 1 : fourniture dans au moins une cuve d'au moins une solution AP dérivée d'au moins un acide phosphorique obtenu par un procédé de production d'acide phosphorique par voie humide, ladite solution AP ayant une température comprise entre 65 °C et 98 °C ; ladite solution AP comprenant avant ladite étape 1 :

- entre 58% et 63 % en poids de $P_2O_5$ et
- entre 0,15 % et 0,6% en poids de $SO_3$ par rapport au poids total de ladite solution AP ;

étape 2 : ajout de carbonate de baryum dans ladite cuve ; ledit carbonate de baryum présentant une distribution granulométrique telle que :

- moins de 1% en poids dudit carbonate de baryum passe à travers un tamis de maille de 45 $\mu$m ;
- entre 1% et 2 % en poids, dudit carbonate de baryum passe à travers un tamis de maille de 63 $\mu$m ;
- entre 2 et 11% en poids dudit carbonate de baryum passe à travers un tamis de maille de 250 $\mu$m ;
- entre 30 et 45 % en poids dudit carbonate de baryum passe à travers un tamis de maille de 500 $\mu$m ;
- au moins 85% en poids dudit carbonate de baryum passe à travers un tamis de maille de 1000 $\mu$m;

étape 3 : mélange dudit carbonate de baryum et de ladite solution AP dans ladite cuve ;

étape 4 : sortie hors de ladite cuve de ladite solution AP formée pendant l'étape 3 après un temps de séjour de ladite solution AP dans ladite au moins une cuve compris entre 15 et 240 minutes;

étape 5 : purification de ladite solution AP sortie de ladite au moins une cuve à l'étape 4, par extraction par solvant pour obtenir une solution AP purifiée.

## DESCRIPTION DÉTAILLÉE

Dans le cadre de la présente invention, le terme « comprenant » ne doit pas être interprété comme excluant d'autres éléments que ceux explicitement mentionnés. Il doit être interprété comme spécifiant la présence des caractéristiques ou étapes indiquées, mais n'exclut pas la présence ou l'ajout d'une ou plusieurs autres caractéristiques ou étapes. Ainsi, la portée de l'expression « une méthode comprenant les étapes A et B » ne doit pas être limitée aux méthodes constituées uniquement des étapes A et B. En conséquence, les termes « comprenant » et « y compris » englobent les termes plus restrictifs « constitué essentiellement de » et « constitué de ».

Le terme « acide phosphorique » est connu de l'homme de métier et possède la signification qui lui est habituellement donnée par l'homme de métier. En particulier, le terme acide phosphorique fait référence à un composé ayant la formule générale $HO[P(OH)(O)O]_nH$ avec $n \geq 1$. Pour des acides polyphosphorique, $n > 1$ et lorsque $n = 1$, il s'agit de l'acide orthophosphorique.

Plus particulièrement, en fonction de la concentration de l'acide phosphorique dans une solution aqueuse, une partie de l'acide phosphorique peut être sous forme d'acide polyphosphorique (n>1) et une autre partie peut être sous forme d'acide orthophosphorique (n=1). Par exemple, une solution aqueuse d'acide phosphorique ayant moins de 61 %

en poids de $P_2O_5$ par rapport au poids total de ladite solution aqueuse, aura un pourcentage en poids d'acide orthophosphorique beaucoup plus important que le pourcentage en poids d'acide polyphosphorique.

Dans le contexte de la présente invention, les teneurs en $SO_3$, notamment dans ladite solution AP, désignent des teneurs en sulfates exprimées en équivalents $SO_3$. Sauf indication contraire, ces teneurs en $SO_3$ sont des teneurs en poids (w/w). Le pourcentage en poids de $SO_3$ peut être déterminé par la méthode décrite après.

Dans le contexte de la présente invention, les teneurs en $P_2O_5$ désignent des teneurs en acide phosphorique ($H_3PO_4$) exprimées en équivalents $P_2O_5$. Sauf indication contraire, ces teneurs en $P_2O_5$ sont des teneurs en poids (w/w). Le pourcentage en poids de $P_2O_5$ peut être déterminé par la méthode décrite après.

Comme indiqué avant, la présente invention concerne une méthode de purification d'au moins une solution aqueuse d'acide phosphorique [ci-après, solution AP] en continu. La méthode selon la présente invention comprend une étape 1 de fourniture dans au moins une cuve d'au moins une solution AP dérivée d'au moins un acide phosphorique obtenu par un procédé de production d'acide phosphorique par voie humide.

Les procédés de production d'acide phosphorique par voie humide sont connus de l'homme de métier. N'importe quel procédé de production d'acide phosphorique par voie humide connu peut être utilisé.

Selon un mode de réalisation préféré, ladite solution AP est dérivée d'au moins un acide phosphorique obtenu par un procédé de production d'acide phosphorique par voie humide. De préférence, ledit procédé de production d'acide phosphorique par voie humide comprend une mise en contact d'au moins une source de phosphore avec au moins une solution aqueuse acide, de préférence une solution aqueuse d'acide sulfurique. En particulier, les procédés peuvent être des procédés de type dihydrate, hémihydrate ou une combinaison d'un procédé dihydrate-hémihydrate ou encore un procédé tel que décrit dans les brevets WO2012/163425A1 et/ou WO2011067321A1 et/ou WO2017220718A1.

Dans la méthode selon la présente invention, ladite solution AP a une température comprise entre 65 °C et 98 °C. En particulier, la température de ladite solution AP peut être obtenue par chauffage de celle-ci avant ladite étape 1 ou pendant ladite étape 1. Ladite solution AP peut être chauffée par n'importe quel moyen standard connu de l'homme de métier, par exemple par utilisation d'un échangeur à plaques ou d'une épingle de chauffe ou par injection de vapeur (directe ou indirecte).

De préférence, ladite solution AP a une température d'au moins 70°C, plus préférentiellement, d'au moins 80°C.

De préférence, ladite solution AP a une température d'au plus 90°C, plus préférentiellement, d'au plus 85°C.

Une telle température permet d'accélérer la solubilisation du carbonate de baryum et la formation du sulfate de baryum.

Ladite solution AP comprend avant ladite étape 1 :

- entre 50% et 63 % en poids de $P_2O_5$ et
- entre 0,15 % et 0,6% en poids de $SO_3$ par rapport au poids total de ladite solution AP.

Le pourcentage en poids relativement élevé en $P_2O_5$ avant ladite étape 1 peut être le résultat d'autres étapes de purification et de concentration connues de l'homme de métier et non mentionnées explicitement ayant lieu avant ladite étape 1. Un pourcentage élevé en $P_2O_5$ avant ladite étape 1 comporte des avantages. Cela permet d'augmenter le rendement total du procédé de l'invention.

De préférence, ladite solution AP comprend avant ladite étape 1 au moins 52% en poids de $P_2O_5$, préférentiellement au moins 54 % en poids de $P_2O_5$, préférentiellement au moins 56% en poids de $P_2O_5$, préférentiellement au moins 58 % en poids de $P_2O_5$, préférentiellement au moins 59 % en poids de $P_2O_5$, par rapport au poids total de ladite solution AP.

De préférence, ladite solution AP comprend avant ladite étape 1 au plus 62 % en poids de $P_2O_5$, préférentiellement au plus 61 % en poids de $P_2O_5$, préférentiellement au plus 60 % en poids de $P_2O_5$ par rapport au poids total de ladite solution AP.

Dans un mode de réalisation, ladite solution AP comprend avant ladite étape 1, au moins 52% en poids et au plus 62% en poids, préférentiellement au moins 54 % en poids et au plus 61 % en poids, plus préférentiellement au moins 56% en poids et au plus 61 % en poids, encore plus préférentiellement au moins 58 % en poids et au plus 61 % en poids, encore plus préférentiellement au moins 59 % en poids et au plus 60 % en poids de $P_2O_5$, par rapport au poids total de ladite solution AP.

De préférence, ladite solution AP comprend avant ladite étape 1 entre 0,20% et 0,60 % en poids de $SO_3$, plus préférentiellement entre 0,20 et 0,50 % en poids de $SO_3$ par rapport au poids total de ladite solution AP avant ladite étape 1.

Durant l'étape 2 de ladite méthode selon l'invention, du carbonate de baryum est ajouté dans ladite solution AP.

Il a été observé que le carbonate de baryum ajouté à l'étape 2 réagit avec le sulfate présent dans ladite solution AP pour former un précipité de sulfate de baryum qui forme des incrustations à faible dureté facilement décrochables dans les installations servant à mettre en œuvre la méthode selon l'invention. Les incrustations de sulfate de baryum peuvent ensuite être facilement nettoyées par exemple avec de l'eau sous pression. Ces incrustations de sulfate de baryum sont plus faciles à nettoyer que des incrustations de sulfate de calcium qui auraient été obtenues par ajout de $CaCO_3$ à la solution AP à la place du $BaCO_3$. En conséquence, l'utilisation de carbonate de baryum à l'étape 2 permet entre autres de raccourcir les temps de nettoyage et donc d'améliorer la rentabilité de la méthode selon l'invention.

Le carbonate de baryum peut être ajouté dans ladite solution AP de toutes les manières connues de l'homme de métier adaptées à un procédé en continu.

De préférence, ledit carbonate de baryum est ajouté à ladite étape 2 et ladite solution AP est fournie à ladite étape 1 au moyen d'une conduite coaxiale. De préférence, ladite conduite coaxiale comprend une conduite interne et une conduite externe. De préférence, ledit carbonate de baryum est ajouté à ladite solution AP par ladite conduite interne et au moins une partie de ladite solution AP est fournie dans ladite au moins une cuve par ladite conduite externe. Au moins une partie de ladite solution AP peut être ajoutée par d'autres moyens. De préférence, ledit carbonate de baryum est ajouté à ladite étape 2 et ladite solution AP est fournie à ladite étape 1 de manière simultanée et continue.

Il a été trouvé de manière surprenante que l'utilisation conjointe de carbonate de baryum ayant la granulométrie telle que définie ci-après et de la conduite coaxiale pour fournir ladite solution AP dans ladite au moins une cuve et pour ajouter ledit carbonate de baryum et ladite solution AP, permet entre autres d'éviter les pertes de carbonate de baryum dans les dégazages des cuves et par conséquent la surconsommation de carbonate de baryum durant la méthode de purification.

Ledit carbonate de baryum ajouté à ladite étape 2, présente une distribution granulométrique telle que :

- moins de 1% en poids dudit carbonate de baryum passe à travers un tamis de maille de 45 $\mu$m ;
- entre 0% et 2 % en poids, dudit carbonate de baryum passe à travers un tamis de maille de 63 $\mu$m ; préférentiellement entre 1% et 2 % en poids, dudit carbonate de baryum passe à travers un tamis de maille de 63 $\mu$m ;
- entre 2 et 11% en poids dudit carbonate de baryum passe à travers un tamis de maille de 250 $\mu$m ;
- entre 25 et 60 % en poids dudit carbonate de baryum passe à travers un tamis de maille de 500 $\mu$m, de préférence entre 30 et 55 % en poids dudit carbonate de baryum passe à travers un tamis de maille de 500 $\mu$m, plus préférentiellement entre 30 et 50 % en poids dudit carbonate de baryum passe à travers un tamis de maille de 500 $\mu$m, encore plus préférentiellement, entre 30 et 45 % en poids dudit carbonate de baryum passe à travers un tamis de maille de 500 $\mu$m ;
- au moins 85% en poids dudit carbonate de baryum passe à travers un tamis de maille de 1000 $\mu$m, de préférence un tamis de maille de 900 $\mu$m.

La granulométrie du carbonate de baryum peut être déterminée par n'importe quelle technique de tamisage connue de l'homme de métier, par exemple, les normes DIN4188 ou DIN 1171 ou Afnor X11520. En particulier, un tamisage mécanique peut être utilisé. En pratique une quantité définie de carbonate de baryum (par exemple 100 g) est tamisée sur un tamis vibrant pendant 20 min avec des diamètres de maille de tamis différents (par exemple, avec des mailles (en $\mu$m) de 45, 63, 250, 500, 1000, etc.) ; les refus récoltés sur chaque tamis sont pesés sur une balance de précision et sont convertis en pourcentages en poids pour chaque diamètre de maille par rapport au poids total de carbonate de baryum.

Les inventeurs ont trouvé que de manière surprenante, une telle granulométrie du carbonate de baryum permettait à la fois de lui conférer une bonne coulabilité et une bonne réactivité vis-à-vis du sulfate présent dans ladite solution AP. La meilleure coulabilité provient entre autres du fait que ladite granulométrie permet d'éviter ou de minimiser la formation d'agglomérats dans les silos qui servent à stocker ledit carbonate de baryum dans ladite solution AP. La présence d'agglomérats dans le silo empêche un écoulement optimal du carbonate de baryum hors du silo vers le système d'extraction du carbonate de baryum hors du silo (par exemple vis d'extraction du silo, conduit d'extraction, système de dosage, ...) qui alimenteront par exemple une conduite coaxiale permettant l'ajout du baryum dans ladite solution AP. La meilleure réactivité permet entre autres d'éviter l'ajout excédentaire de carbonate de baryum dans ladite solution AP. La coulabilité est déterminée par l'indice Flodex™ tel de décrit après.

En particulier, la granulométrie du carbonate de baryum ajouté à l'étape 2 permet au carbonate de baryum d'avoir un indice Flodex mesuré selon la méthode décrite après d'au plus 15, de préférence d'au plus 10, plus préférentiellement d'environ 5.

La fluidité de l'écoulement peut aussi être mesurée en déterminant l'angle de talus tel que décrit après. Plus un angle de talus est faible, plus le carbonate de baryum s'écoule de manière fluide. En particulier, la granulométrie du carbonate de baryum ajouté à l'étape 2 permet au carbonate de baryum d'avoir un angle de talus mesuré selon la méthode décrit après d'au plus 50°, de préférence d'au plus 45°.

De préférence, ledit carbonate de baryum ajouté à ladite étape 2, présente une distribution granulométrique telle qu'en outre entre 1% et 8 % en poids dudit carbonate de baryum passe à travers un tamis de maille de 105 $\mu$m.

De préférence, ledit carbonate de baryum ajouté à ladite étape 2, présente une distribution granulométrique telle qu'en outre moins de 15 % en poids dudit carbonate de baryum passe à travers un tamis de maille de 150 $\mu$m.

De préférence, ledit carbonate de baryum ajouté à ladite étape 2 peut avoir une densité comprise entre 1,6 et 2,2 Kg/L.

De préférence, ledit carbonate de baryum est stocké dans au moins un silo avant ladite étape 2.

La méthode selon l'invention comprend à l'étape 3 un mélange dudit carbonate de baryum et de ladite solution AP dans ladite cuve.

La méthode selon l'invention comprend à l'étape 4 une sortie hors de ladite au moins une cuve de ladite solution AP formée pendant l'étape 3 après un temps de séjour de ladite solution AP dans ladite au moins une cuve, compris entre 15 et 240 minutes ; de préférence entre 20 et 120 minutes, de préférence entre 25 et 90 minutes ; de préférence entre 30 et 60 minutes.

En particulier, le temps de séjour de ladite solution AP dans une cuve peut être déterminée en divisant le volume de ladite solution AP dans ladite cuve pas le débit volumique de fourniture de ladite solution AP dans ladite solution AP.

Un tel temps de séjour permet d'assurer un abattement suffisant du $SO_3$ de ladite solution AP.

La méthode selon l'invention comprend à l'étape 5 une purification de ladite solution AP sortie de ladite au moins une cuve à l'étape 4, par extraction par solvant pour obtenir une solution AP purifiée.

Dans le domaine de la production et de la purification de l'acide phosphorique, de nombreuses techniques de purification par extraction par solvant sont connues de l'homme de métier. Des solvants organiques ou des mélanges de solvants organiques sont en général utilisés. De tels solvants organiques comprennent de manière non exhaustive et non limitative: l'isopropyléther (dont le di-isopropyléther), le tri-n-butylphosphate, le méthylisobutylcétone, le butanol, l'isobutanol, les mélanges isopropyléther/ tri-n-butylphosphate, les mélanges kérosène/hexanol, les mélanges kérosène/-butanol.

La solution AP purifiée obtenue à l'étape 5 comprend par rapport au poids total de ladite solution AP purifiée de préférence au plus 0,002 % en poids de $SO_3$, plus préférentiellement au plus 0,0015 % en poids de $SO_3$, plus préférentiellement au plus 0,0010 % en poids de $SO_3$ ,plus préférentiellement au plus 0,0009 % en poids de $SO_3$, plus préférentiellement au plus 0,0005 % en poids de $SO_3$, plus préférentiellement au plus 0,0002 % en poids de $SO_3$, plus préférentiellement au plus 0,0001 % en poids de $SO_3$ par pourcent de $P_2O_5$ compris dans ladite solution AP purifiée.

Par exemple, une solution AP purifiée comprenant 61.5% en poids de $P_2O_5$, peut comprendre 10 à 1000 ppm de $SO_3$, de préférence entre 50 et 1000 ppm de $SO_3$, de préférence 50 à 750 ppm de $SO_3$, de préférence entre 500 et 1000 ppm de $SO_3$,

La méthode selon la présente invention peut comprendre en outre une étape de mesure du pourcentage en poids de $SO_3$ dans ladite solution AP purifiée obtenue à l'étape 5. Le pourcentage en poids de $SO_3$ peut être mesuré par la méthode de détermination du $SO_3$ telle que décrite après. En particulier, le pourcentage en poids de $SO_3$ dans ladite solution AP purifiée peut être mesuré à plusieurs reprises tout au long de ladite méthode selon l'invention. Lorsqu'il est observé que la quantité de $SO_3$ augmente ou diminue dans la solution AP purifiée, la quantité de carbonate de baryum ajoutée à l'étape 2 peut être adaptée de manière à garantir que le pourcentage en poids de $SO_3$ dans ladite solution AP purifiée soit sous une valeur déterminée. Le pourcentage en poids de carbonate de baryum peut aussi être varié en fonction de la quantité d'abattement de sulfate voulue.

De préférence, le carbonate de baryum est ajouté à l'étape 2 en une quantité suffisante pour que ladite solution AP purifiée obtenue à l'étape 5 comprenne préférence au plus 0,002 % en poids de $SO_3$, plus préférentiellement au plus 0,0015 % en poids de $SO_3$, plus préférentiellement, au plus 0,0010 % en poids de $SO_3$ ,plus préférentiellement au plus 0,0009 % en poids de $SO_3$, plus préférentiellement au plus 0,0005 % en poids de $SO_3$, plus préférentiellement au plus 0,0002 % en poids de $SO_3$, plus préférentiellement au plus 0,0001 % en poids de $SO_3$ par pourcent de $P_2O_5$ compris dans ladite solution AP purifiée.

De préférence, à l'étape 2, entre 0,001 et 0,012 g de carbonate de baryum sont ajoutés par rapport chaque gramme de $P_2O_5$ comprise dans ladite solution AP purifiée obtenue à l'étape 5. De manière encore plus préférentielle, à l'étape 2, entre 0,002 et 0,008 g de carbonate de baryum sont ajoutés par rapport chaque gramme de $P_2O_5$ comprise dans ladite solution AP purifiée obtenue à l'étape 5. De manière encore plus préférentielle, à l'étape 2, entre 0,003 et 0,005 g de carbonate de baryum sont ajoutés par rapport chaque gramme de $P_2O_5$ comprise dans ladite solution AP purifiée obtenue à l'étape 5.

## Méthode de mesure du pourcentage en poids de $P_2O_5$

Dans le contexte de la présente invention, les pourcentages en poids de $P_2O_5$ mentionnés peuvent être mesurés par les méthodes connues de l'homme de métier, en particulier par colorimétrie. De manière plus particulière, la mesure par colorimétrie peut être réalisée sur un spectrophotomètre de marque SKALAR.

## Méthode de mesure du pourcentage en poids de $SO_3$

Dans le contexte de la présente invention, les pourcentages en poids de $SO_3$ mentionnés peuvent être mesurés par les méthodes connues de l'homme de métier, en particulier par turbidimétrie. Plus particulièrement, la mesure par turbidimétrie est réalisée à l'aide d'un photomètre de type Metrohm, qui mesure l'atténuation de l'intensité d'un rayon lumineux de longueur d'onde connue traversant la suspension. Un étalonnage avec des solutions de chlorure de baryum doit être réalisé.

### Méthode de mesure de l'indice Flodex

La coulabilité peut être mensurée par l'indice Flodex™ qui est lui-même déterminé grâce à un système de type Flodex™ bien connu de l'homme de métier. L'indice Flodex est un indice de fluidité basé sur une échelle arbitraire de 4 à 40. Le système Flodex comprend un récipient dans lequel on place la poudre (ou les granulés) à tester et dont la base consiste en un diaphragme d'ouverture calibrée au travers duquel on observe s'il y a écoulement de ladite poudre. Par essais successifs, on détermine le diamètre minimum pour lequel cette poudre s'écoule librement. Ce diamètre (en millimètres) correspond à l'indice Flodex™.

### Méthode de mesure de l'angle de talus

Un volume défini de carbonate de baryum est prélevé est placé dans un entonnoir placé au-dessus et au centre d'un cylindre à fond plat. Une fois que l'entièreté du produit s'est écoulée, la hauteur en mm de la pyramide formée est mesurée. Par une formule trigonométrique, l'angle à la base de la pyramide est mesuré.

### Exemple 1

Une solution aqueuse d'acide phosphorique a été purifiée par la méthode selon la présente invention. L'acide phosphorique était issu d'un procédé de production par voie humide par attaque d'une roche de phosphate par de l'acide sulfurique. La solution AP comprenait par rapport au poids total de ladite solution AP, 60% en poids de $P_2O_5$ et 0,38 % en poids de $SO_3$ avant d'être fournie dans une cuve.

La solution AP a été fournie en continu dans une cuve par la conduite externe d'une conduite coaxiale comprenant une conduite interne et une conduite externe. La solution AP contenue dans la cuve avait une température de 80°C car celle-ci avait été chauffée à par un échangeur à plaques. Du carbonate de baryum était préalablement stocké dans un silo puis ajouté en continu dans ladite cuve par la conduite interne de la même conduite coaxiale utilisée pour fournir ladite solution AP, de manière simultanée et en continu. Le flux d'acide phosphorique sortant de ladite conduite externe formait un rideau d'acide ce qui réduisait les pertes de carbonate de baryum. Le carbonate de baryum avait les caractéristiques/propriétés montrées dans le tableau 1.

**Tableau 1** - **Carbonate de baryum**

| Caractéristique/propriétés | valeur |
|---|---|
| % en poids passant à travers un tamis de maille de 45 $\mu$m | <1 |
| % en poids passant à travers un tamis de maille de 63 $\mu$m | 1,1 |
| % en poids passant à travers un tamis de maille de 75 $\mu$m | 1,2 |
| % en poids passant à travers un tamis de maille de 105 $\mu$m | 5 |
| % en poids passant à travers un tamis de maille de 150 $\mu$m | 6,3 |
| % en poids passant à travers un tamis de maille de 250 $\mu$m | 9,5 |
| % en poids passant à travers un tamis de maille de 500 $\mu$m | 39,6 |
| % en poids passant à travers un tamis de maille de 1000 $\mu$m | >85 |
| Angle de talus (°) | 40 |
| Indice Flodex | 6 |
| Densité (Kg/L) | 1,6-2,2 |

Pendant l'ajout du carbonate de baryum, la solution AP contenue dans ladite cuve qui avait une température de 80°C était mélangée.

Ladite solution AP ayant été traitée par le $BaCO_3$ est sortie de ladite cuve et est ensuite purifiée par extraction par un solvant organique.

Différentes puretés ont été obtenues en fonction du temps de séjour de ladite solution AP dans ladite cuve, comme résumé dans le tableau 2.

**Tableau 2**

| Temps de séjour | % en poids de $SO_3$ | % d'abattement du $SO_3$ |
|---|---|---|
| 15 minutes | 0,10 | 73,7 |
| 30 minutes | 0,07 | 81,5 |
| 60 minutes | 0,07 | 81,5 |

Le pourcentage d'abattement du $SO_3$ est calculé comme suit :

$$\% \text{ abatement} = 100 *(SO_3 \text{ initial} - SO_3 \text{ final}) / SO_3 \text{ initial}$$

0,012 g de carbonate de baryum ont été ajoutés par rapport chaque gramme de $P_2O_5$ comprise dans ladite solution AP purifiée obtenue à l'étape 5.

Ladite solution AP purifiée obtenue à l'étape 5 après l'extraction par solvant comprend moins de 0,0020 % en poids de $SO_3$, par pourcent de $P_2O_5$ compris dans ladite solution AP purifiée.

La granulométrie, l'angle de talus, l'indice flodex, les pourcentages en poids de $P_2O_5$ et de $SO_3$ ont été mesurés comme expliqué avant.

Au vu des résultats obtenus, il est clair que la granulométrie du carbonate de baryum permet d'obtenir des temps de réaction courts car après un temps de séjour de seulement 15 minutes, plus de 73% du $SO_3$ a déjà été abattu. Dans autre côté, comme montré dans le tableau 1, le carbonate de baryum possède un angle de talus de 40° et un indice flodex de 6, ce qui indique bien que le carbonate de baryum s'écoule de manière fluide. Ceci a été confirmé lors de la mise en œuvre du procédé, aucun problème d'écoulement du carbonate de baryum, que ce soit au niveau du silo ou de la conduite servant à ajouter le carbonate de baryum n'a été constaté. Aucune formation d'agrégats de carbonate de baryum n'a été observée.

D'autres essais ont également été réalisés avec 0,008 et 0,005 g de carbonate de baryum ajoutés par rapport chaque gramme de $P_2O_5$ comprise dans ladite solution AP purifiée obtenue à l'étape 5. Ces essais ont donné les mêmes résultats que ceux montrés à l'exemple 1.

**Exemple comparatif**

L'exemple 1 a été répété à l'identique à l'exception du carbonate de baryum ajouté dont la granulométrie était comme montrée dans le tableau 3. De plus, l'acide phosphorique de départ comportait 0,40 % en poids de $SO_3$.

**Tableau 3** - **Carbonate de baryum**

| Caractéristique/propriétés | valeur |
|---|---|
| % en poids passant à travers un tamis de maille de 45 $\mu$m | 95,5 |
| % en poids passant à travers un tamis de maille de 63 $\mu$m | 96,7 |
| % en poids passant à travers un tamis de maille de 75 $\mu$m | 97,6 |
| % en poids passant à travers un tamis de maille de 105 $\mu$m | 98,9 |
| % en poids passant à travers un tamis de maille de 150 $\mu$m | 99,9 |
| % en poids passant à travers un tamis de maille de 250 $\mu$m | 100 |
| % en poids passant à travers un tamis de maille de 500 $\mu$m | 100 |
| % en poids passant à travers un tamis de maille de 1000 $\mu$m | 100 |
| Angle de talus (°) | 60 |
| Indice Flodex | 34 |

Après un temps de séjour de 15 minutes, 75 % du $SO_3$ était abattu.

La granulométrie, l'angle de talus, l'indice flodex, les pourcentages en poids de $P_2O_5$ et de $SO_3$ ont été mesurés comme expliqué avant.

Par contre, il a été observé que la manipulation de la poudre de $BaCO_3$ était rendue très difficile et que celle-ci ne s'écoulait pas facilement hors du silo et dans ladite conduite interne. Cela est confirmé par les mesures d'angle de talus et d'indice flodex montrée dans le tableau 3.

**Revendications**

1. Méthode de purification d'au moins une solution aqueuse d'acide phosphorique [ci-après, solution AP] en continu comprenant au moins les étapes suivantes :

   étape 1 : fourniture dans au moins une cuve d'au moins une solution AP dérivée d'au moins un acide phosphorique obtenu par un procédé de production d'acide phosphorique par voie humide, ladite solution AP ayant une température comprise entre 65 °C et 98 °C ; ladite solution AP comprenant avant ladite étape 1 :

   • entre 50% et 63 % en poids, préférentiellement entre 58% et 63% en poids de $P_2O_5$ et
   • entre 0,15 % et 0,6% en poids de $SO_3$ par rapport au poids total de ladite solution AP ; préférentiellement entre 1% et 2 % en poids, dudit carbonate de baryum passe à travers un tamis de maille de 63 $\mu$m ;

   étape 2 : ajout de carbonate de baryum dans ladite cuve ; ledit carbonate de baryum présentant une distribution granulométrique telle que :

   • moins de 1% en poids dudit carbonate de baryum passe à travers un tamis de maille de 45 $\mu$m ;
   • entre 0 % et 2 % en poids, préférentiellement entre 1% et 2% en poids dudit carbonate de baryum passe à travers un tamis de maille de 63 $\mu$m;
   • entre 2 et 11% en poids dudit carbonate de baryum passe à travers un tamis de maille de 250 $\mu$m ;
   • entre 25 et 60 % en poids, de préférence entre 30 et 55 % en poids dudit carbonate de baryum passe à travers un tamis de maille de 500 $\mu$m, plus préférentiellement entre 30 et 50 % en poids dudit carbonate de baryum passe à travers un tamis de maille de 500 $\mu$m, encore plus préférentiellement entre 30 et 45% en poids dudit carbonate de baryum passe à travers un tamis de maille de 500 $\mu$m ;
   • au moins 85% en poids dudit carbonate de baryum passe à travers un tamis de maille de 1000 $\mu$m ;

   étape 3 : mélange dudit carbonate de baryum et de ladite solution AP dans ladite cuve ;
   étape 4 : sortie hors de ladite cuve de ladite solution AP formée pendant l'étape 3 après un temps de séjour de ladite solution AP dans ladite au moins une cuve, compris entre 15 et 240 minutes ;
   étape 5 : purification de ladite solution AP sortie de ladite au moins une cuve à l'étape 4, par extraction par solvant pour obtenir une solution AP purifiée.

2. Méthode selon la revendication 1, dans laquelle ledit carbonate de baryum est ajouté à ladite étape 2 et ladite solution AP est fournie à ladite étape 1 au moyen d'une conduite coaxiale, comprenant une conduite interne et une conduite externe.

3. Méthode selon la revendication 2, dans laquelle ledit carbonate de baryum étant ajouté à ladite solution AP par ladite conduite interne et ladite solution AP étant fournie dans ladite au moins une cuve par ladite conduite externe de ladite conduite coaxiale.

4. Méthode selon l'une quelconque des revendications 1 à 3, dans laquelle ledit carbonate de baryum est ajoutée à ladite étape 2 et ladite solution AP est fournie à ladite étape 1 de manière simultanée et continue.

5. Méthode selon l'une quelconque des revendications précédentes, dans laquelle, le carbonate de baryum ajouté à l'étape 2 a une densité comprise entre 1,6 et 2,2 Kg/L.

6. Méthode selon l'une quelconque des revendications précédentes, dans laquelle le carbonate de baryum est ajouté à l'étape 2 en une quantité suffisante pour que ladite solution AP purifiée obtenue à l'étape 5 comprenne au plus 0,0020 % en poids de $SO_3$, par pourcent de $P_2O_5$ compris dans ladite solution AP purifiée.

7. Méthode selon l'une quelconque des revendications précédentes, dans laquelle le carbonate de baryum est ajouté à l'étape 2 en une quantité suffisante pour que ladite solution AP purifiée obtenue à l'étape 5 comprenne au plus 0,0015 % en poids de $SO_3$ par pourcent de $P_2O_5$ compris dans ladite solution AP purifiée.

8. Méthode selon l'une quelconque des revendications précédentes, dans laquelle le carbonate de baryum est ajouté à l'étape 2 en une quantité suffisante pour que ladite solution AP purifiée obtenue à l'étape 5 comprenne au plus 0,0010 % en poids de $SO_3$, préférentiellement au plus 0,0009 % en poids de $SO_3$, plus préférentiellement au plus 0,0005 % en poids de $SO_3$, plus préférentiellement au plus 0,0002 % en poids de $SO_3$, plus préférentiellement au plus 0,0001 % en poids de $SO_3$ par pourcent de $P_2O_5$ compris dans ladite solution AP purifiée.

9. Méthode selon l'une quelconque des revendications précédentes, dans laquelle ledit temps de séjour de ladite solution AP dans ladite cuve est entre 20 et 120 minutes, de préférence entre 25 et 90 minutes, de préférence entre 30 et 60 minutes.

10. Méthode selon l'une quelconque des revendications précédentes, dans laquelle entre 0,001 et 0,012 g de carbonate de baryum sont ajouté par rapport chaque gramme de $P_2O_5$ comprise dans ladite solution AP purifiée obtenue à l'étape 5.

11. Méthode selon l'une quelconque des revendications précédentes, dans laquelle entre 0,002 et 0,008 g de carbonate de baryum sont ajouté par rapport chaque gramme de $P_2O_5$ comprise dans ladite solution AP purifiée obtenue à l'étape 5.

12. Méthode selon l'une quelconque des revendications précédentes, dans laquelle entre 0,003 et 0,005 g de carbonate de baryum sont ajouté par rapport chaque gramme de $P_2O_5$ comprise dans ladite solution AP purifiée obtenue à l'étape 5.

13. Méthode selon l'une quelconque des revendications précédentes, dans laquelle ladite solution AP comprend avant ladite étape 1 entre 0,20% et 0,60 % en poids de $SO_3$, par rapport au poids total de ladite solution AP.

14. Méthode selon l'une quelconque des revendications précédentes, dans laquelle ladite solution AP comprend avant ladite étape 1 entre 0,20 et 0,50 % en poids de $SO_3$ par rapport au poids total de ladite solution AP.

**Patentansprüche**

1. Verfahren zur kontinuierlichen Reinigung mindestens einer wässrigen Phosphorsäurelösung [nachfolgend AP-Lösung], mindestens die folgenden Schritte umfassend:

Schritt 1: Bereitstellen in mindestens einem Tank mindestens einer AP-Lösung, die aus mindestens einer Phosphorsäure abgeleitet ist, die durch ein Phosphorsäure-Herstellungsverfahren im nassen Verfahren erhalten wird, wobei die AP-Lösung eine Temperatur aufweist, die zwischen 65 °C und 98 °C liegt; wobei die AP-Lösung vor dem Schritt 1 umfasst:

- zwischen 50 Gew.-% und 63 Gew.-%, vorzugsweise zwischen 58 Gew.-% und 63 Gew.-% an $P_2O_5$ und
- zwischen 0,15 Gew.-% und 0,6 Gew.-% an $SO_3$ in Bezug auf das Gesamtgewicht der AP-Lösung; vorzugsweise zwischen 1 Gew.-% und 2 Gew.-% des Bariumcarbonats verläuft durch ein Sieb mit einer Maschenweite von 63 µm;

Schritt 2: Zugeben von Bariumcarbonat in den Tank; wobei das Bariumcarbonat eine Korngrößenverteilung aufweist, sodass:

- weniger als 1 Gew.-% des Bariumcarbonats durch ein Sieb mit einer Maschenweite von 45 µm verläuft;
- zwischen 0 Gew.-% und 2 Gew.-%, vorzugsweise zwischen 1 Gew.-% und 2 Gew.-% des Bariumcarbonats durch ein Sieb mit einer Maschenweite von 63 µm verläuft;
- zwischen 2 und 11 Gew.-% des Bariumcarbonats durch ein Sieb mit einer Maschenweite von 250 µm verläuft;
- zwischen 25 und 60 Gew.-%, vorzugsweise zwischen 30 und 55 Gew.-% des Bariumcarbonats durch ein Sieb mit einer Maschenweite von 500 µm verläuft, bevorzugter zwischen 30 und 50 Gew.-% des Bariumcarbonats durch ein Sieb mit einer Maschenweite von 500 µm verläuft, noch bevorzugter zwischen 30 und 45 Gew.-% des Bariumcarbonats durch ein Sieb mit einer Maschenweite von 500 µm verläuft;
- mindestens 85 Gew.-% des Bariumcarbonats durch ein Sieb mit einer Maschenweite von 1000 µm verläuft;

Schritt 3: Mischen des Bariumcarbonats und der AP-Lösung in dem Tank;

Schritt 4: Auslassen aus dem Tank der während des Schrittes 3 gebildeten AP-Lösung nach einer Aufenthaltsdauer der AP-Lösung in dem mindestens einen Tank, die zwischen 15 und 240 Minuten beträgt;

Schritt 5: Reinigung der in Schritt 4 aus dem mindestens einen Tank ausgelassenen AP-Lösung durch Extraktion mittels Lösungsmittel, um eine gereinigte AP-Lösung zu erhalten.

2. Verfahren nach Anspruch 1, wobei mittels einer koaxialen Leitung, die eine innere Leitung und eine äußere Leitung umfasst, das Bariumcarbonat im Schritt 2 zugegeben und die AP-Lösung im Schritt 1 bereitgestellt wird..

3. Verfahren nach Anspruch 2, wobei das Bariumcarbonat durch die innere Leitung zur AP-Lösung zugegeben wird, und die AP-Lösung durch die äußere Leitung der koaxialen Leitung in dem mindestens einen Tank bereitgestellt wird.

4. Verfahren nach einem der Ansprüche 1 bis 3, wobei das Bariumcarbonat im Schritt 2 zugegeben wird und die AP-Lösung im Schritt 1 gleichzeitig und kontinuierlich bereitgestellt wird.

5. Verfahren nach irgendeinem der vorstehenden Ansprüche, wobei das im Schritt 2 zugegebene Bariumcarbonat eine Dichte aufweist, die zwischen 1,6 und 2,2 Kg/L beträgt.

6. Verfahren nach irgendeinem der vorstehenden Ansprüche, wobei das Bariumcarbonat im Schritt 2 in einer ausreichenden Menge zugegeben wird, damit die im Schritt 5 erhaltene gereinigte AP-Lösung höchstens 0,0020 Gew.-% an $SO_3$, je Prozent an $P_2O_5$ umfasst, das in der gereinigten AP-Lösung umfasst ist.

7. Verfahren nach irgendeinem der vorstehenden Ansprüche, wobei das Bariumcarbonat im Schritt 2 in einer ausreichenden Menge zugegeben wird, damit die im Schritt 5 erhaltene gereinigte AP-Lösung höchstens 0,0015 Gew.-% an $SO_3$ je Prozent an $P_2O_5$ umfasst, das in der gereinigten AP-Lösung umfasst ist.

8. Verfahren nach irgendeinem der vorstehenden Ansprüche, wobei das Bariumcarbonat im Schritt 2 in einer ausreichenden Menge zugegeben wird, damit die im Schritt 5 erhaltene gereinigte AP-Lösung höchstens 0,0010 Gew.-% an $SO_3$, vorzugsweise höchstens 0,0009 Gew.-% an $SO_3$, bevorzugter höchstens 0,0005 Gew.-% an $SO_3$, bevor-zugter höchstens 0,0002 Gew.-% an $SO_3$, bevorzugter höchstens 0,0001 Gew.-% an $SO_3$ je Prozent an $P_2O_5$ umfasst, das in der gereinigten AP-Lösung umfasst ist.

9. Verfahren nach irgendeinem der vorstehenden Ansprüche, wobei die Aufenthaltsdauer der AP-Lösung im Tank zwischen 20 und 120 Minuten, vorzugsweise zwischen 25 und 90 Minuten, vorzugsweise zwischen 30 und 60 Minuten beträgt.

10. Verfahren nach irgendeinem der vorstehenden Ansprüche, wobei zwischen 0,001 und 0,012 g an Bariumcarbonat in Bezug auf jedes Gramm an $P_2O_5$, das in der im Schritt 5 gereinigten AP-Lösung umfasst ist, zugegeben wird.

11. Verfahren nach irgendeinem der vorstehenden Ansprüche, wobei zwischen 0,002 und 0,008 g an Bariumcarbonat in Bezug auf jedes Gramm an $P_2O_5$, das in der im Schritt 5 gereinigten AP-Lösung umfasst ist, zugegeben wird.

12. Verfahren nach irgendeinem der vorstehenden Ansprüche, wobei zwischen 0,003 und 0,005 g an Bariumcarbonat in Bezug auf jedes Gramm an $P_2O_5$, das in der im Schritt 5 gereinigten AP-Lösung umfasst ist, zugegeben wird.

13. Verfahren nach irgendeinem der vorstehenden Ansprüche, wobei die AP-Lösung vor dem Schritt 1 zwischen 0,20 Gew.-% und 0,60 Gew.-% an $SO_3$ in Bezug auf das Gesamtgewicht der AP-Lösung umfasst.

14. Verfahren nach irgendeinem der vorstehenden Ansprüche, wobei die AP-Lösung vor dem Schritt 1 zwischen 0,20 und 0,50 Gew.-% an $SO_3$ in Bezug auf das Gesamtgewicht der AP-Lösung umfasst.

**Claims**

1. A method for purifying at least one aqueous solution of phosphoric acid [hereinafter referred to as solution AP] continuously comprising at least the following steps:

   step 1: supplying to at least one vessel at least one solution AP derived from at least one phosphoric acid obtained by a method for wet-chemical production of phosphoric acid, said solution AP having a temperature between 65°C and 98°C; said solution AP comprising before said step 1:

- between 50% and 63% by weight, preferably between 58% and 63% by weight, of $P_2O_5$ and
- between 0.15% and 0.6% by weight of $SO_3$ relative to the total weight of said solution AP; preferably between 1% and 2% by weight, of said barium carbonate passing through a 63 $\mu$m mesh sieve;

step 2: adding barium carbonate to said vessel; said barium carbonate having a particle size distribution such that:

- less than 1% by weight of said barium carbonate passes through a 45 $\mu$m mesh sieve;
- between 0% and 2% by weight, preferably between 1% and 2% by weight, of said barium carbonate passes through a 63 $\mu$m mesh sieve;
- between 2 and 11% by weight of said barium carbonate passes through a 250 $\mu$m mesh sieve;
- between 25 and 60% by weight, preferably between 30 and 55% by weight of said barium carbonate passes through a 500 $\mu$m mesh sieve, more preferably between 30 and 50% by weight of said barium carbonate passes through a 500 $\mu$m mesh sieve, more preferably between 30 and 45% by weight of said barium carbonate passes through a 500 $\mu$m mesh sieve;
- at least 85% by weight of said barium carbonate passes through a 1000 $\mu$m mesh sieve;

step 3: mixing said barium carbonate and said solution AP in said vessel;

step 4: discharging said solution AP formed during step 3 from said vessel after a residence time of said solution AP in said at least one vessel for between 15 and 240 minutes;

step 5: purifying said solution AP discharged from said at least one vessel in step 4 by solvent extraction to obtain a purified solution AP.

2. The method according to claim 1, wherein said barium carbonate is added in said step 2 and said solution AP is supplied in said step 1 by means of a coaxial pipe comprising an internal pipe and an external pipe.

3. The method according to claim 2, wherein said barium carbonate is added to said solution AP through said inner pipe and said solution AP is supplied to said at least one vessel through said external pipe of said coaxial pipe.

4. The method according to any one of claims 1 to 3, wherein said barium carbonate is added in said step 2 and said solution AP is supplied in said step 1 simultaneously and continuously.

5. The method according to any one of the preceding claims, wherein the barium carbonate added in step 2 has a density of between 1.6 and 2.2 kg/L.

6. The method according to any one of the preceding claims, wherein the barium carbonate is added in step 2 in an amount sufficient so that said purified solution AP obtained in step 5 comprises at most 0.0020% by weight of $SO_3$, per percent of $P_2O_5$ contained in said purified solution AP.

7. The method according to any one of the preceding claims, wherein barium carbonate is added in step 2 in an amount sufficient so that said purified solution AP obtained in step 5 comprises at most 0.0015% by weight of $SO_3$ per percent of $P_2O_5$ contained in said purified solution AP.

8. The method according to any one of the preceding claims, wherein the barium carbonate is added in step 2 in an amount sufficient so that said purified solution AP obtained in step 5 comprises at most 0.0010 % by weight $SO_3$, preferably at most 0.0009 % by weight of $SO_3$, more preferably at most 0.0005 % by weight of $SO_3$, more preferably at most 0.0002 % by weight of $SO_3$, more preferably up to 0.0001% by weight of $SO_3$ by percent of $P_2O_5$ contained in said purified solution AP.

9. The method according to any one of the preceding claims, wherein said residence time of said solution AP in said vessel is between 20 and 120 minutes, preferably between 25 and 90 minutes, preferably between 30 and 60 minutes.

10. The method according to any one of the preceding claims, wherein between 0.001 and 0.012 g of barium carbonate is added per gram of $P_2O_5$ contained in said purified solution AP obtained in step 5.

11. The method according to any one of the preceding claims, wherein between 0.002 and 0.008 g of barium carbonate is added per gram of $P_2O_5$ contained in said purified solution AP obtained in step 5.

12. The method according to any one of the preceding claims, wherein between 0.003 and 0.005 g of barium carbonate is added per gram of $P_2O_5$ contained in said purified solution AP obtained in step 5.

13. The method according to any one of the preceding claims, wherein said solution AP comprises before said step 1 between 0.20% and 0.60% by weight of $SO_3$, relative to the total weight of said solution AP.

14. The method according to any one of the preceding claims, wherein said solution AP comprises, prior to said step 1, between 0.20 and 0.50% by weight of $SO_3$ relative to the total weight of said solution AP.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4321245 A
- WO 2012163425 A1
- WO 2011067321 A1
- WO 2017220718 A1